# EUROPEAN PATENT SPECIFICATION

(11) **EP 1 328 746 B1**
(45) Date of publication and mention of the grant of the patent: **17.08.2005**
(21) Application number: 01972823.7
(22) Date of filing: 09.10.2001
(51) Int. Cl.: F16K 15/04

(54) **NON-RETURN VALVE WITH A BALL-SHAPED VALVE BODY**
RÜCKSCHLAGVENTIL MIT EINEM BALLFÖRMIGEN VENTILKÖRPER
CLAPET ANTI-RETOUR A CORPS EN FORME DE BILLE

(30) Priority: 10.10.2000 PL 34313600
(43) Date of publication of application: 23.07.2003
(73) Proprietor: Szuster, Miroslaw, PL 98-350 Biala (PL); Przedsiebiorstwo Inzynierii Srodowiska EKOWODROL Sp. z.o.o., 75-811 Koszalin (PL)
(72) Inventor: Szuster, Miroslaw, PL 98-350 Biala (PL); Przedsiebiorstwo Inzynierii Srodowiska EKOWODROL Sp. z.o.o., 75-811 Koszalin (PL)
(74) Representative: Holme, Edvard
(86) International application number: PCT/PL2001/000081
(87) International publication number: WO 2002/031391

(56) References cited:
- EP-A- 0 163 620
- EP-A- 0 797 006
- CH-A- 300 291
- GB-A- 436 806
- GB-A- 2 222 230

## Description

The invention relates to a non-return valve with a spherical (ball-shaped, ball) valve body, especially in waste water pumping station installations, with a casing equipped with a through-channel (conduit) having an outlet and an inlet terminated with an annular (ring-shaped, ring) valve seat, whereupon the ball valve body is settled in closed position, and additionally equipped with a deflected channel of a diameter larger than the ball valve body diameter, where space is provided for the ball valve body to be set in its open position and where at the inlet, where the deflected channel is interconnected with the through-channel, the valve casing has extended flow cross-section.

It is known from British patent description no. GB 436806 A the non-return valve whose through channel is in the form of elbow and the straight line passing through the ball valve body centre passes the through channel at both its ends.

One of the essential disadvantages of this solution consists in the fact that the ball valve body in the position of the valve full opening is based upon two opposite points of the guiding bar and the slant wall of the valve casing directly near the valve outlet. The stream washing the ball valve body in the fully open position is directed by the slant wall of the valve casing nearly perpendicularly to the axis of the valve outlet. It causes the liquid pressure pulsation, additionally generated by the ball valve body exposed to vibrations. If the ball valve body even stabilises its position after the valve complete opening, the solid particles contained in the waste water may effectively clog the passage between the three basement points of the ball and the internal wall of the deflected channel. It may lead to complete valve blocking.

From Swiss patent description CH 300291 A the non-return valve is known, which has a through channel in the form of elbow and the straight line passing through the ball valve body centre, when the ball is in the fully open position, passes the through channel at both its ends.

Essential disadvantage of this solution consists in the fact that a bar guiding the ball valve body divides the through channel of the valve into two parts and is terminated with a division wall, which divides into two parts also the deflected channel. The division wall situated in such a manner causes high resistance for the liquid stream flow and also constitutes a reason of the valve vibration, because the ball valve body as well as the division wall are continuously exposed to the flowing liquid stream.

This arrangement is not usable for sanitary waste water due to contained impurities, which can cause effectively clog the valve.

British patent application no. 2 222 230 also presents solutions of non-return valves having a blind flange located at the end of a deflected channel provided with an opening, which is connected by means of a differential pipe to the valve outlet. In one version the valve is equipped with a supporting seat located at the end of the deflected channel, being dedicated for the valve body to be settled in fully open position and having substantially greater diameter than the differential pipe diameter. Small pressure difference, existing between pressure in the deflected channel and pressure in the differential pipe, is assisted by the large acting area of the ball valve body being exposed to reduced pressure in the differential pipe. In such a way the force is increased, which presses the valve body against the seat, what assures greater stability of the ball valve body in its fully open position.

The valve however is not useful for liquids with solid particles, which can be frequently found in waste water.

It is observed during the operation of a waste water pumping stations that the non-return valve casing internal surfaces are becoming covered with a growth of sediment (sludge deposits) produced by waste water, especially in places where the liquid velocity is low. It causes the valve be not completely opened during its operation and involves out-of-control pressure growth and therefore both the increased energy consumption and the pump wear.

Equally critical places in a pump installation pressure pipeline, where the sediment is likely to deposit, are all sorts of bends and elbows, which for the sake of periodical cleaning are sometimes equipped with inspection openings and/or replaceable elbow-shaped covers, especially in the hydraulic transport systems for abrasive media.

Non-return valves with ball valve body are frequently mounted near an elbow-shaped duckfoot at the pressure side of the pump installation equipped with a submersible centrifugal pump and necessary fittings. For low flow cross-sections, when two pumps equipped with grinders are used, the solution is employed with two non-return valves being integrated with the connecting face and having common outlet. Due to reduced accessibility to such valves troubles frequently appear during operation.

There is a variant of such a solution in a form of non-return valve performing a role of circuit switching device for two pumps, which is equipped with one ball valve body and with two inlets terminated with ring-shaped seats. The valve operation is controlled by alternative switching the pumps, which are connected by delivery flanges to the valve two inlets, while one of the pump is switched on the ball valve body is settled in the opposite inlet and performing as a diaphragm with an opening.

Disadvantage of such a solution, presented in European patent application no. EP 0 797 006, consists in the fact that the ball valve body in practise moves in the same channel, as the through-channel common for two delivery branches in a form of the letter "V". Complicated path of the ball valve body movement can cause the body blocking in the through-channel as the solid particles present in the through-channel can effectively block the ball valve body. Because the V-shaped through-channel is almost horizontal the sedimentation process of solid particles from waste water is facilitated, which in practise excludes application of the solution for free-vortex submersible pumps.

A vital disadvantage of pressure installations used in waste water pumping stations is also the solids deposits in delivery pipeline and fittings after one of the two pumps brakes down. After the repair or replacement of the damaged pump it is necessary to clean carefully all fittings mounted.

As a result of deep-rooted analysis of the state-of-the-art and the research carried out on further reduction of the medium flow resistance in valves and on elimination of the ball valve body vibration, the new design of the valve was developed according to the invention, characterised with design and manufacturing simplicity.

The characteristic feature of the valve according to the invention is that the valve casing through-channel is provided with a cover in a form of a bend or an elbow, which along the line of its junction with the deflected channel cuts longitudinally this channel.

The cover is favourable connected in parallel to the deflected channel approximately along its whole width.

The cover at the place of the through-channel merging with the deflected channel has an internal edge, performing the role of a guide bar for the ball valve body, which passes into the arc-shaped bulged internal surface of the deflected channel of a radius being equal to the radius of the deflected channel cross-section and terminates with a sharp front edge.

The deflected channel can be made with a cleaning opening, closed with a cleaning cover.

In the advantageous device variant the cover or the cleaning cover has a division wall interconnected to the cover and provided with an opening and one-sided supporting seat. The supporting seat front surface is facing the through-channel inlet and is located at equal distance, in the opposite direction, from the symmetry plane of cross-section of the elbow-shaped arc apex, which distance is lower than the ball valve body radius.

The cover can have at least one delivery branch of the through-channel, which axis to the best advantage coincides with the axis of the through-channel inlet or outlet or is equally distant from these axes.

Another variant has a division wall with an opening connected to the cover or the cleaning cover, which opening is equipped with double-sided supporting seat dedicated for one of the two ball valve bodies to be alternatively settled in the valve fully open position. The said division wall is located at the symmetry plane of the said cover cross-section, and the through-channel has at every of its two inlets the ring-shaped seat located at equal distance from the channel outlet axis.

In the special variant of the valve with a ball valve body in a form of a circuit switch, the through-channel has two inlets terminated with ring seats dedicated for one ball valve body or, alternatively, one of the two ball valve bodies to be settled in. In this variant of the valve with ball valve body the role of deflected channel division wall is performed, alternatively, by one of two inlets, and the outlet is located on the cover.

The opening in the division wall creates with the valve casing through-channel the principally oval free passage area of width being equal or greater than the through-channel width.

In the special variant of the valve made according to this invention the cover has a flange for a mechanism of adjustable pressure pad, which axis coincides with the through-channel inlet axis. The cover also can be made with assembling lugs located symmetrically in respect to its longitudinal section symmetry plane.

In the solution according to the invention the function of the ball valve body guiding bar is integrated with the through channel cover and after its removing very good access is achieved to the ball valve body and the seat as well as the possibility of inspecting the valve inlet and outlet. In this manner a simplified construction of the valve is obtained. This advantage makes the possibility of inspecting and repairing without a need of dismounting the valve from the pipeline.

Additionally thanks to replaceable cover it is possible to realise different variations of the valve according to the invention and at the same time to reduce the number of the valve casing and the cover variations. In a case of abrasive media transportation the cover, as the part most exposed to damage, can be considered as the spare part.

The additional advantage of the valve according to this invention is the fact that between the through-channel and the deflected channel an area of free passage exists, which width is equal at least to the through-channel width, and that the channels are connected to each other at both ends. This minimises the possibility of blocking the valve by solid particles contained in waste water. In the basic valve variant, having one inlet and one outlet, the natural pressure loss, resulting from the local resistance in the through-channel elbow (bend) section, is used to keep the ball valve body in fully open position even at much lower liquid flows than in the case of classic valves, having inlet and outlet located in line.

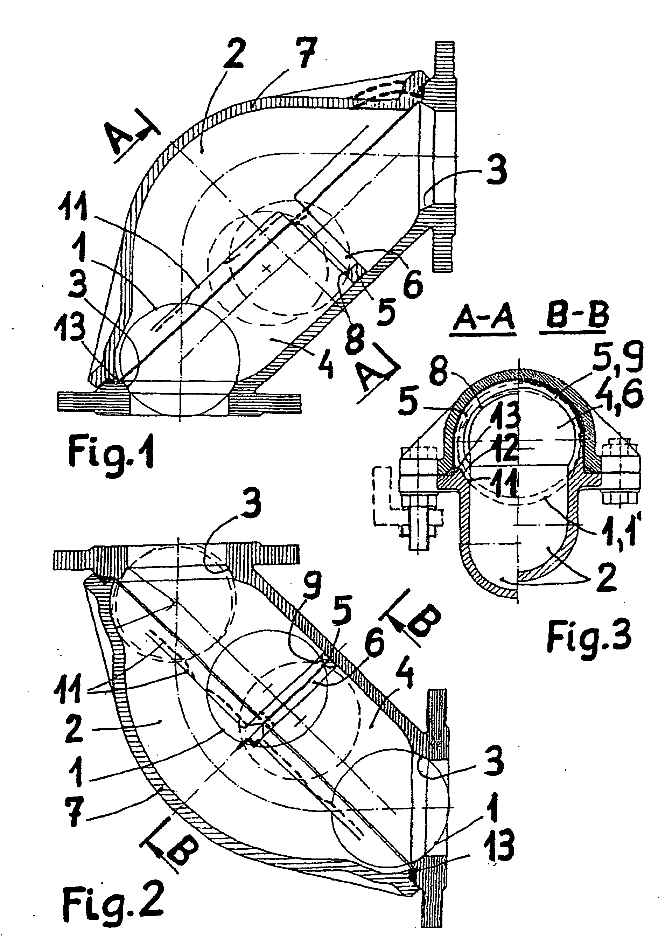

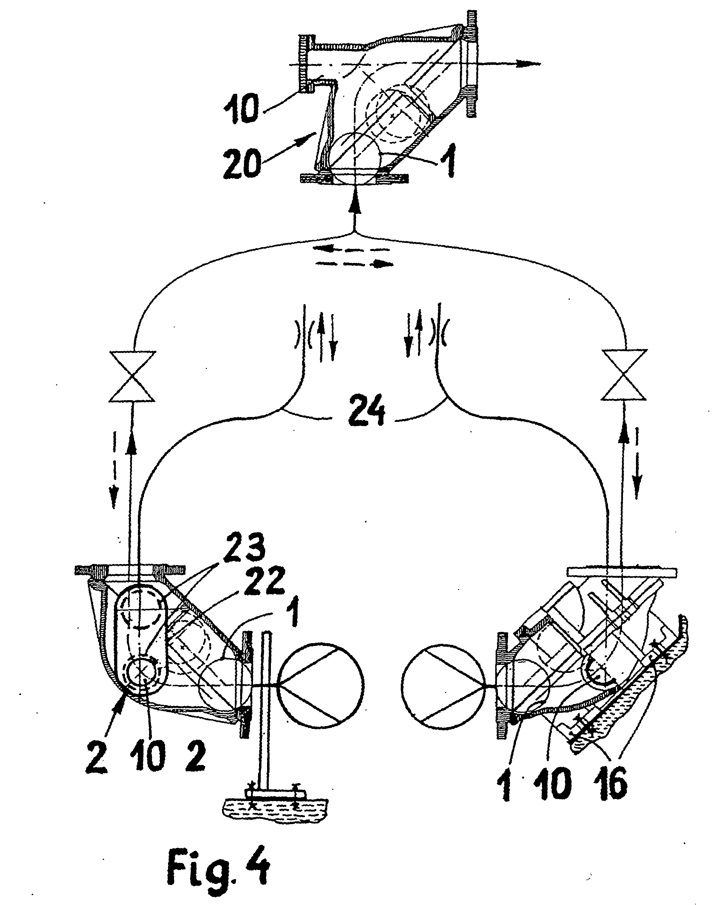

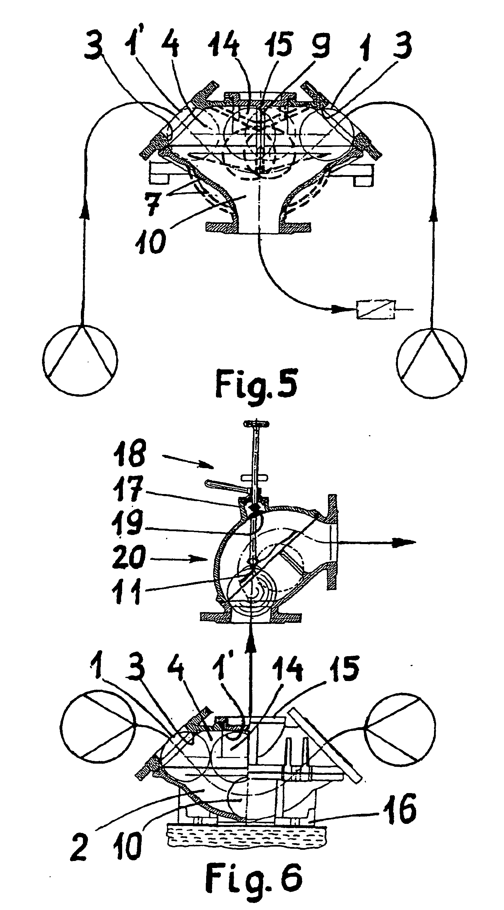

The examples of the object of the invention are presented in figures, where fig. I presents a longitudinal section of the basic variant of the non-return valve casing; fig. 2 - a longitudinal section of the universal version of the non-return valve casing; fig. 3 - cross-section of the non-return valve casing at the symmetry plane according to fig. 2, appended with half-view of the division wall version as in fig. 1 and with half-section view of the division wall version as in fig. 2; fig. 4 - two non-return valves with connected mixing valves, installed at delivery sides of two pumping installations, along with the additional non-return valve end view and the vertical cross-section of one mixing valve; fig. 5 - non-return valve with two inlets and two ball valve bodies of the upper pumping station coupler, presented as the longitudinal cross-section and end view; fig. 6 - non-return valve with two inlets and two ball valve bodies of lower pumping station coupler, presented as half-view and half-section.

The non-return valve with a ball valve body I , shown in fig. 1, has a casing provided with a through-channel 2, with a ring seat 3 at the inlet, where the ball valve body is settled in the closed position. The casing is also provided with a deflected channel 4 of a diameter greater than the ball valve body 1 diameter, where the ball valve body 1 is placed when in the open position. At a place, where the deflected channel 4 is interconnected with the through-channel 2, the casing has an extended flow cross-section. The deflected channel 4 has a division wall 5 with an opening 6, fixing the ball valve body 1 in the fully open position. The division wall 5 is permanently attached to an bend-shaped cover 7.

Fig. 2 presents the universal variant of the non-return valve with the ball valve body 1, having two alternative inlets with ring seats 3. The cover 7, connected in parallel with the deflected channel 4, constitutes the principal part of the bend-shaped through-channel 2. This cover is provided with the division wall 5, permanently attached to the said cover and having the opening 6. In fig. 1 the division wall 5 with the opening 6 is provided with one-sided supporting seat 8 for the ball valve body 1 to be settled in, while in the fully open position. This seat's front plane is facing the through-channel 2 inlet and is located at equal distance in the opposite direction, from the symmetry plane of the cross-section of the cover's 7 arc apex, which distance is lower than the ball valve body 1 radius. In fig. 2 the division wall 5 with the opening 6 is provided with a double-sided supporting seat 9 designated for the ball valve bodies 1 or 1' to be alternatively settled in. When the cover 7 without the division wall 5 is used, then the non-return valve with one ball valve body 1 or with two ball valve bodies 1 and 1' can be applied as a circuit switch. In such a case one of the two inlets acts as the division wall with the opening, and the role of supporting seat is performed by the ring seat 3 of this inlet, as shown in fig. 6. The universal version of the non-return valve, as shown in fig. 2, can also perform the role of the non-return valve with one ball valve body 1. In this case possible assembly errors can be corrected by appropriate positioning the ball valve body 1. The flow direction can be changed using the same method without the need of the pipeline disassembling. The cover 7 can have, besides the normal outlet, at least one delivery branch 10 of the through-channel 2, which to the best advantage is in line with the inlet or the outlet axis (fig. 4) or is perpendicular to these axes. In the case of universal version of the device, as in fig. 2, the delivery branch 10 can be used as the actual common outlet for the two inlets (fig. 5 and fig. 6).

The cover 7, at the location of its interconnection with the deflected channel 4, cuts the channel longitudinally approximately along all its width. As a result a smooth transition between the through-channel 2 and the deflective channel 4 is obtained, which minimises the resistance of the liquid flow through the valve. At the place, where the through-channel 2 merge with the deflected channel 4, as shown in fig. 3, an internal edge 11 is made, which acts as a guide bar for the ball valve body 1 at this part of its trajectory. The internal edge 11 converts to the arc-shaped bulged internal surface 12 of the deflected channel 4 of the radius equal to the radius of the deflected channel 4 cross-section and terminates with a sharp front edge 13. The deflected channel 4 can have a cleaning opening 14, closed from outside with a cleaning cover 15, preferable of the same diameter (fig. 5 and fig. 6). The division wall 5 with the opening 6 can be attached to the cleaning cover 15, as shown in fig. 5,rather than to the cover 7. Fastening the cover 7 to the base and supporting structures is facilitated by assembling lugs 16, located symmetrically in response to the symmetry plane of the cover longitudinal cross-section.

The beneficial feature of the valve according to this invention consists in the fact that its through-channel 2 is in the form of elbow (bend), and that the straight line passing through a centre of the ball valve body 1, while at the fully open position, crosses the through-channel at its ends. It enables to use the natural pressure loss, resulting from local resistance in the elbow (bend) part of the through-channel 2, to keep the ball valve body 1 in the fully open position by unbalanced forces acting on it even at low liquid flow in the channel.

Additionally the opening 6 in the division wall 5 is opened at one side, and from this side it forms together with the through-channel 2 a basically oval area of free passage of width equal at least to the channel width. The said free passage area protects the valve from blocking by solid particles contained in waste water.

The valve according to this invention can be applied as a shut-off (stop) and control valve by installing at its inlet axis a flange 17 of an adjusting mechanism 18 of a pressure pad 19, as shown in fig. 6. The flange 17 in the cover 7 can also be used as a delivery branch after disassembling the adjusting mechanism 18 of the pressure pad 19.

The non-return valve according to this invention in the variant for liquids can be provided with the ball valve body 1 made of material of total density higher or lower than the flowing liquid density i.e. so called floating or sinking ball valve body. In case of a sinking ball the ring seat 3 should be placed below the division wall 5, and in case of a floating ball - above the flap. It doesn't, however, apply to variants of non-return valves with two inlets with ring seats 3 as shown in fig. 5 and fig. 6, which can be provided with both the floating or sinking ball valve bodies 1 and 1' or the ball can be of the same density as the liquid flowing through the valve. This ball valve bodies can be made of metal or plastic as a shell covered with rubber or as a homogeneous mass of one material. The cover 7 can be made of a different kind of material than the remaining part of the casing, for example cab be made of a wear-resistant material. The casing of the non-return valve according to this invention can be made as a metallic casting, for small diameters also as a forging or made of plastic using the injection moulding method.

In fig. 4 two examples of pumping installations with submersible pumps are shown, with the pump delivery sides interconnected at the main outlet, where an additional non-return valve 20 is installed. Each of the two pumping installation delivery sides is equipped with the non-return valve according to this invention connected to the pump installation duck-foot bend , and equipped with a shut-off valve. The additional non-return valve 20 and the non-return valves according to this invention have in the cover 7 a delivery branch 10. To the delivery branch 10 of the non-return valve, at each delivery side of the two pumping installations, a mixing valve 21 is connected. The mixing valve 21 has a control well 22 with adjustable gas inflow and outflow, controlling the liquid level in the well, where a ball control body floats. When the control well 22 is filled with liquid and none of the two pumps works the ball control body 23 is located outside the course of liquid flow through the mixing valve 21. After switching one of the pumps on, the liquid initially flows through the inlet of the non-return valve according to this invention, lifting the ball valve body 1, then through the delivery branch 10 emerging from the cover 7 flows through the opening of the mixing valve 21. Then a part of liquid stream supplied by the pump starts to flow in the direction of the non-return valve outlet and through the second delivery side of the second pumping installation comes to the outlet of the second non-return valve, where after flushing the valve upper and middle part flows out from the delivery branch 10 of the cover 7 to the mixing valve 21 opening.

After some time, sufficient for mixing the pumped liquid and/or after the pump start-up phase, to the best advantage one of the two mixing valves 21 closes at first. The pressure at the pumping installation delivery sides increases. The mixing intensity of the second mixing valve 21 increases as well, and therefore the flushing intensity of the pumping installation second delivery side. If the pressure growth doesn't cause the opening of the additional non-return valve 20, then it opens only after the second mixing valve 21 is closed. However, if the pressure growth causes the additional non-return valve 20 opening, then the pressure in the mixing valve 21 increase even more, because the pump must additionally move the liquid column behind the additional non-return valve 20, which even further intensifies the flushing of the pumping installation delivery side and the mixing valve 21. If both pumps are in operation the flushing cycles alternately repeat.

The valve according to this invention, as shown in fig. 5, constitutes the upper coupler to under-sling the two pumps by means of rigid pipes and catches. The valve according to this invention, as shown in fig. 5, is a double (twin) non-return valve with two ball valve bodies 1, 1' and two inlets with ring seats 3. During the liquid flow, coming from one of the inlets , the ball valve body 1 moves nearly horizontally inside the deflected channel 4 and settles on a double-sided supporting seat 9, opening the flow towards the delivery branch 10 of the cover 7 located below the deflected channel 4. At the same time the alternative ball valve body 1' is settled in the ring seat 3 of the second inlet. When the at the first inlet side is switched off, the ball valve body 1 settles in the ring seat 3 of this inlet. When the second pump at the second inlet side is switched off , the alternative ball valve body 1' opens the passage through that inlet, and the liquid stream rinse out the impurities pushed into this valve section during the preceding pumping cycle, performed by the first pump, and most of it will be directed toward the delivery branch 10. Such cycles, being alternately repeated, effectively clean the deflected channel 4 as well as the through-channel 2 along its entire length. In this case the ball valve bodies 1, 1' are to the best advantage made as floating ones, and the upper edge of the deflected channel 4 is to the best advantage inclined downward towards the double-sided supporting seat 9. It ensures a quick inlet closing of the valve according to this invention after switching off the pump connected to this inlet, which was marked with the broken line.

In fig. 6 a solution is shown, in which the valve according to this invention is made as the circuit switch with one or two ball valve bodies 1, 1'. During the liquid flow, coming from one of the inlets, the ball valve body 1 moves horizontally towards the second inlet, where closes the liquid flow toward the second inlet by settling upon its ring seat 3. After the second inlet is closed the liquid flows, downwards, toward the common delivery branch 10 of the cover 7 and then upwards to the additional non-return valve 20. After the pump is switched off the additional non-return valve 20 closes the reverse flow, and the inlet from the switched off pump side remains open. When the second pump at alternative inlet is switched on, the ball valve body 1 is moved by the liquid flow toward the first inlet and is settled in its ring seat 3, and the impurities deposited in the deflected channel 4 are carried away by the liquid stream and directed to the delivery branch 10 of the cover 7. In such a way the self-acting flushing of the valve according to this invention is performed by alternate pumping with two pumps. When within the solution two ball valve bodies 1 and 1' are used in the deflected channel 4, then the deflected channel 4 self-cleaning process is intensified by the two balls striking against each other, and additionally the ball 1 and 1' impact at the two opposite seats is softened. The introduction of the two ball valve bodies 1 and 1' into the deflected channel 4 directs the flow toward the delivery branch 10 of the cover 7, what reduces the local pressure loss at the valve. The same method can be applied in the basic valve variant, made according to fig. 5 with sinking ball and with application of the additional non-return valve with the floating ball. In such a case the second ball is settled in the double-sided supporting seat 9, and during the alternate (reverse) flow is knocked out from this seat by the first ball. The cover 7 can have symmetrical recesses for the ball valve body 1, and the one-sided supporting seat 8 can be made as a homogeneous part with the deflected channel 4 and/or with the split place near the top of the sharp frontal edge 13, which was marked with bold broken line. Such a realisation enables any assembling direction of the cover 7 without any influence on the valve operation. In a similar way the valve according to fig. 2 can be made, whereas the additional non-return valve 20 of a shortened design has one-sided supporting seat 8 of shortened construction, and its cover has adequately profiled internal edge widened at its ends in order to absorb the impact from the ball during the valve opening. The shortened construction of the valve according to this invention in particular can be used in case when the pressure pad 19 is used, compensating in this way the additional force carried by the cover 7 or unifying the valve length with typical elbows (bends). The side effect of the shortened valve construction is the increase of local pressure loss, enabling the valve full opening at minimal flow. The design of the valve according to this invention enables its repair by seat reaming and/or bushing without disassembling from the pipeline or by reversing the cover 7, and then reversing the valve casing. Additionally the profiled internal edge 11 enables a smooth transition of the ball valve body 1 to its extreme positions (closed and fully open) without significant resistance and vibrations, which is marked with the broken line in fig. 1 and fig. 2. The valve according to this invention can be applied in many combinations in the delivery and suction pipelines. The additional non-return valve 20 in fig. 6 can be connected to the second valve of this kind by means of a "T" joint with a gate valve possible installed at its inlets, whereas the additional non-return valve 20 in fig. 4 can be connected to second non-return valve of this kind by means of a "T" joint and two gate valves installed at its inlets. The valves according to this invention shown in fig. 4 and fig. 6 can be fixed by means of the assembling lugs to adequate supporting structures, to the base or to supporting blocks or can be underslung by means of the prolonged screws fixing the cover 7 as shown in fig. 5 and fig. 4 in half-section view A-A.

The examples of the valve realisation according to this invention presented above do not cover all the possibilities of the valve realisation an application embodied with patent claims from 1 to 11.

## Claims

1. A non-return valve with at least one ball valve body, having a casing provided with an elbow-shaped or bend-shaped through-channel with an outlet and at least one inlet with a ring seat, on which the ball valve body settles in the valve closed position, and additionally having a deflected channel of a greater diameter than the ball valve body diameter, where the ball enters in the valve open position, while at the inlet, where the through-channel merges with the deflected channel, the casing has extended cross-section of the flow area, and the deflected channel has a division wall with an opening connected to the through-channel outlet, which division wall fixes the ball valve body in a fully open position, whereas a section of a line connecting the ball valve body centres at its extreme positions (closed and fully open) is placed along all its length inside the deflected channel and that a straight line running through the centre of the ball valve body (1), situated in the fully open position, crosses the through channel (2) at both its ends, **characterised in that** the through-channel (2) of the valve casing has a cover (7) in a form of an elbow or a bend, which at the line of its junction with the deflected channel (4) cuts this channel along its length.

2. The valve according to the claim 1, **characterised in that** the cover (7) is in parallel coupled to the deflected channel (4) approximately along its full width.

3. The valve according to the claim 1, **characterised in that** the cover (7) at the place of the through-channel (2) merging with the deflected channel (4) has the internal edge (11) acting as a guide bar for the ball valve body (1), which edge passes into the arc-shaped bulged internal surface (12) of the deflected channel (4), of the radius being equal to the radius of cross-section of the deflected channel (4), and terminated with a sharp front edge (13).

4. The valve according to the claim 1, **characterised in that** the casing deflected channel (4) has the cleaning opening (14) closed with the cleaning cover (15).

5. The valve according to the claim 2 or 4, **characterised in that** the division wall (5) is attached to the cover (7) or to the cleaning cover (15), having the opening (6), provided with the one-sided supporting seat (8), whereas the seat frontal plane faces the through-channel (2) inlet and is located at equal distance in the opposite direction from the symmetry plane of the transversal section of the cover 7 bow apex, which distance is lower than the ball valve body (1) radius.

6. The valve according to the claim 1, **characterised in that** the cover (7) has at least one delivery branch (10) of the through-channel (2), whereas the symmetry axis of at least one of these branches to the best advantage coincides with the axis of the inlet or the outlet of the through-channel (2) or is equally distant from these axes.

7. The valve according to the claim 2 or 4, **characterised in that** division wall (5) is connected to the cover (7) or to the cleaning cover (15), which division wall has an opening (6) with double-sided supporting seat (9) intended for one of the two ball valve bodies (1), (1') to be alternatively settled in at the fully open position, wherein the division wall (5) is placed at the symmetry plane of the cover or cleaning cover cross-section, and the through-channel (2) has at each of its inlets the ring seat (3) at equal distance from the channel outlet axis.

8. The valve according to the claim 1, **characterised in that** it is made in the form of the circuit switch, whose through-channel (2) has two inlets with the ring seats (3) intended for one ball valve body (1) or alternatively for one of the two ball valve bodies (1), (1') to be settled in, wherein the role of the deflected channel (4) division wall (5) is alternatively performed by one of the inlets, and the outlet is located at the cover (7).

9. The valve according to the claim 2 or 4, **characterised in that** the division wall (5) opening (6) constitutes together with the through-channel (2) a basically oval free passage area, of width equal or greater than the through-channel (2) width.

10. The valve according to the claim 1, **characterised in that** the cover (7) has the flange (17) for the adjusting mechanism (18) of the pressure pad (19), whose axis coincides with the through-channel (2) inlet axis.

11. The valve according to the claim 1, **characterised in that** the cover (7) has the assembling lugs (16) located symmetrically in respect to the symmetry plane of the longitudinal cross-section of the cover.

## Patentansprüche

1. Rückschlagventil mit wenigstens einem Kugelventilkörper, das mit einem Gehäuse, mit einem gekrümmten oder gebogenen Durchgangskanal mit einem Auslass und wenigstens einem Einlass mit einem Ringsitz, auf dem der Kugelventilkörper in der geschlossenen Position des Ventils sitzt, und weiter mit einem Führungskanal mit gegenüber dem Durchmesser des Kugelventilkörpers größerem Durchmesser, in den die Kugel in der geöffneten Position des Ventils eintritt, versehen ist, wobei das Gehäuse an dem Einlass dort, wo der Durchgangskanal in den Führungskanal übergeht, einen vergrößerten Durchfluss-Querschnitt hat und der Führungskanal eine mit einer Öffnung versehene Trennwand, die mit dem Auslass der Durchgangskanals verbunden ist, hat, die den Kugelventilkörper in der vollständig geöffneten Position hält, wobei ein Abschnitt einer Linie, die die Zentren des Kugelventilkörpers in seinen Extrempositionen (geschlossen oder vollständig offen) verbindet, entlang ihrer gesamten Länge im Inneren des Führungskanals liegt und eine Gerade, die durch das Zentrum des Kugelventilkörpers (1) in der vollständig geöffneten Position verläuft, den Durchgangskanal (2) an seinen beiden Enden kreuzt, **dadurch gekennzeichnet, dass** der Durchgangskanal (2) des Ventilgehäuses eine gekrümmte oder gebogene Abdeckung (7) aufweist, die den Führungskanal (4) auf der Linie seines Übergangs in diesen entlang seiner Erstreckung schneidet.

2. Ventil nach Anspruch 1, **dadurch gekennzeichnet, dass** die Abdeckung (7) mit dem Führungskanal (4) annähernd über die volle Breite parallel gekoppelt ist.

3. Ventil nach Anspruch 1, **dadurch gekennzeichnet, dass** die Abdeckung (7) an dem Ort, an dem der Durchgangskanal (2) in den Führungskanal (4) übergeht, einen als Führungsschiene für den Kugelventilkörper (1) wirkenden Innenrand (11) aufweist, der in die bogenförmig ausgebuchtete Innenfläche (12) des Führungskanals (4) läuft, dessen Radius dem Radius des Querschnitts des Führungskanals (4) gleich ist und mit einer scharfen Vorderkante abschließt.

4. Ventil nach Anspruch 1, **dadurch gekennzeichnet, dass** das Gehäuse des Führungskanals (4) eine von einem Reinigungsdeckel (15) verschlossene Reinigungsöffnung (14) hat.

5. Ventil nach einem der Ansprüche 2 oder 4, **dadurch gekennzeichnet, dass** die Trennwand (5) an der Abdeckung (7) oder dem Reinigungsdeckel (15) angebracht ist, wobei die Öffnung (6) mit einem einseitigen Stützsitz (8) versehen ist, dessen Vorderebene zu dem Einlass des Durchgangskanals (2) weist und mit einem gleichen Abstand in der entgegengesetzten Richtung von der Symmetrieebene des Längsabschnitts des Bogenscheitels der Abdeckung (7) angeordnet ist, wobei der Abstand geringer ist als der Radius des Kugelventilkörpers (1).

6. Ventil nach Anspruch 1, **dadurch gekennzeichnet, dass** der Deckel (7) wenigstens einen Ablasszweig (10) des Durchgangskanals (2) hat, wobei die Symmetrieachse wenigstens eines Ablasszweiges bestmöglich mit der Achse des Einlasses oder des Auslasses des Durchgangskanals (2) übereinstimmt oder einen gleichen Abstand von diesen Achsen hat.

7. Das Ventil nach Anspruch 2 oder 3, **dadurch gekennzeichnet, dass** die Trennwand (5) mit der Abdeckung (5) oder dem Reinigungsdeckel (15) verbunden ist und eine Öffnung (6) mit einem doppelseitigen Stützsitz (9) zum alternativen Aufnehmen einen der beiden Kugelventilkörper (1, 1') in der vollständig geöffneten Position hat, wobei die Trennwand (5) in der Symmetrieebene des Querschnitts der Abdeckung oder des Reinigungsdeckels ist und der Durchgangskanal (2) an jedem seiner Einlässe den Ventilsitz (3) mit gleichem Abstand vom der Achse des Auslasses des Kanals hat.

8. Das Ventil nach Anspruch 1, **dadurch gekennzeichnet, dass** es in Form eines Verbindungsschalters ist, dessen Durchgangskanal (2) zwei Einlässe hat, dessen Ringsitz (3) für einen Kugelventilkörper (1) oder alternativ für einen der beiden Kugelventilkörper (1, 1'), der bzw. die einzusetzen sind, bestimmt ist, wobei es die Aufgabe der Trennwand (5) des Führungskanals (4) alternativ durch einen dieser Einlässe übernommen wird und der Auslass an der Abdeckung (7) angeordnet ist.

9. Das Ventil nach einem der Ansprüche 2 oder 4, **dadurch gekennzeichnet, dass** die Öffnung (6) der Trennwand gemeinsam mit dem Durchgangskanal (2) eine im wesentlichen ovale freie Durchlassfläche bildet und der Auslass an der Abdeckung (7) angeordnet ist.

10. Das Ventil nach Anspruch 1, **dadurch gekennzeichnet, dass** die Abdeckung (7) einen Flansch (17) für einen Justiermechanismus (18) eines Druckkissens (19) hat, dessen Achse mit der Achse des Einlasses des Durchgangskanals (2) übereinstimmt.

11. Das Ventil nach Anspruch 1, **dadurch gekennzeichnet, dass** die Abdeckung (7) Montageaugen (16) hat, die symmetrisch in Bezug auf die Symmetrieebene des Längsquerschnitts der Abdeckung angeordnet sind.

## Revendications

1. Clapet de non-retour avec au moins un corps de clapet à bille, présentant un boîtier muni d'un canal de passage coudé ou fléchi avec une sortie et au moins une entrée avec un siège annulaire, sur lequel le corps de clapet à bille repose dans la position fermée du clapet, et présentant en plus un canal dévié d'un diamètre supérieur au diamètre de corps de clapet à bille, dans lequel la bille pénètre dans la position ouverte du clapet, tandis qu'à l'entrée, dans laquelle le canal de passage rejoint le canal dévié, le boîtier présente une section transversale étendue de la section de passage, et le canal dévié présente une paroi de division avec une ouverture raccordée à la sortie de canal de passage, laquelle paroi de division fixe le corps de clapet à bille dans une position complètement ouverte, tandis qu'une section d'une ligne reliant les centres du corps de clapet à bille au niveau des ses positions extrêmes (fermée et complètement ouverte) est placée le long de sa longueur à l'intérieur du canal dévié et qu'une ligne droite passant à travers le centre du corps de clapet à bille (1), situé dans la position complètement ouverte, traverse le canal de passage (2) à ses deux extrémités, **caractérisé en ce que** le canal de passage (2) du boîtier de clapet présente un couvercle (7) sous forme d'un coude ou d'une flexion, qui, au niveau de la ligne de sa jonction avec le canal dévié (4), coupe ce canal le long de sa longueur.

2. Clapet selon la revendication 1, **caractérisé en ce que** le couvercle (7) est couplé en parallèle au canal dévié (4) approximativement le long de sa pleine largeur.

3. Clapet selon la revendication 1, **caractérisé en ce que** le couvercle (7), à l'emplacement du canal de passage (2) rejoignant le canal dévié (4), a le bord interne (11) agissant comme une barre de guidage pour le corps de clapet à bille (1), lequel bord passe à l'intérieur de la surface interne bombée en forme d'arc (12) du canal dévié (4), du rayon égal au rayon de la section transversale du canal dévié (4), et terminé par un bord frontal tranchant (13).

4. Clapet selon la revendication 1, **caractérisé en ce que** le canal dévié (4) de boîtier a l'ouverture de nettoyage (14) fermée par le couvercle de nettoyage (15).

5. Clapet selon la revendication 2 ou 4, **caractérisé en ce que** la paroi de division (5) est fixée au couvercle (7) ou au couvercle de nettoyage (15), ayant l'ouverture (6), munie du siège de support à simple face (8), tandis que le plan frontal de siège fait face à l'entrée de canal de passage (2) et est placé à égale distance dans la direction opposée du plan de symétrie de la section transversale du sommet de courbure du couvercle 7, laquelle distance est inférieure au rayon du corps de clapet à bille (1).

6. Clapet selon la revendication 1, **caractérisé en ce que** le couvercle (7) a au moins une branche de distribution (10) du canal de passage (2), tandis que l'axe de symétrie d'au moins une de ces branches coïncide de la manière la plus avantageuse avec l'axe de l'entrée ou de la sortie du canal de passage (2) ou est à égale distance par rapport à ces axes.

7. Clapet selon la revendication 2 ou 4, **caractérisé en ce que** la paroi de division (5) est reliée au couvercle (7) ou au couvercle de nettoyage (15), laquelle paroi de division a une ouverture (6) avec un siège de support à double face (9) destiné à ce qu'un des deux corps de clapet à bille (1), (1') repose dans celui-ci en alternance dans la position complètement ouverte, dans lequel la paroi de division (5) est placée au niveau du plan de symétrie de la section transversale de couvercle ou de couvercle de nettoyage, et le canal de passage (2) présente à chacune de ses entrées le siège annulaire (3) à égale distance de l'axe de sortie du canal.

8. Clapet selon la revendication 1, **caractérisé en ce qu'**il est fabriqué sous la forme du commutateur de circuit, dont le canal de passage (2) présente deux entrées avec les sièges annulaires (3) destinés à ce qu'un corps de clapet à bille (1) ou en alternance un des deux corps de clapet à bille (1), (1') repose dans ceux-ci, dans lequel le rôle de la paroi de division (5) du canal dévié (4) est exécuté en alternance par une des entrées, et la sortie est placée au niveau du couvercle (7).

9. Clapet selon la revendication 2 ou 4, **caractérisé en ce que** l'ouverture (6) de la paroi de division (5) constitue conjointement avec le canal de passage (2) une zone de passage libre grossièrement ovale, d'une largeur supérieure ou égale à la largeur du canal de passage (2).

10. Clapet selon la revendication 1, **caractérisé en ce que** le couvercle (7) présente la bride (17) pour le mécanisme de réglage (18) du coussinet de pression (19), dont l'axe coïncide avec l'axe d'entrée du canal de passage (2).

11. Clapet selon la revendication 1, **caractérisé en ce que** le couvercle (7) a les oreilles d'assemblage (16) placées de manière symétrique par rapport au plan de symétrie de la section transversale longitudinale du couvercle.
